**Europäisches Patentamt**

**European Patent Office**

**Office européen des brevets**

(19)

(11) Veröffentlichungsnummer : **0 375 760 B1**

(12)

# EUROPÄISCHE PATENTSCHRIFT

(45) Veröffentlichungstag der Patentschrift :
**26.02.92 Patentblatt 92/09**

(51) Int. Cl.$^5$ : **G01D 9/40**

(21) Anmeldenummer : **89906071.9**

(22) Anmeldetag : **26.05.89**

(86) Internationale Anmeldenummer :
**PCT/EP89/00597**

(87) Internationale Veröffentlichungsnummer :
**WO 89/11634 30.11.89 Gazette 89/28**

(54) **PLOTTER MIT FLACHBETT UND WERKZEUGWAGEN.**

(30) Priorität : **26.05.88 CH 2030/88**

(43) Veröffentlichungstag der Anmeldung :
**04.07.90 Patentblatt 90/27**

(45) Bekanntmachung des Hinweises auf die
Patenterteilung :
**26.02.92 Patentblatt 92/09**

(84) Benannte Vertragsstaaten :
**AT BE CH DE FR GB IT LI NL SE**

(56) Entgegenhaltungen :
**FR-A- 2 462 381**
**US-A- 3 068 575**

(73) Patentinhaber : **Leica Heerbrugg AG**
**CH-9435 Heerbrugg (CH)**

(72) Erfinder : **SPRENGER, Franz**
**Krüzmader 14**
**CH-9443 Widnau (CH)**
Erfinder : **KÖPPEL, Ottmar**
**Lugwiesstr. 14**
**CH-9443 Widnau (CH)**

## Beschreibung

Die Erfindung betrifft einen Plotter mit einem Flachbett, mit einem in einer Koordinaten-Richtung verfahrbaren Werkzeugwagen und mit einem am Wagen in einer zweiten Koordinaten-Richtung verfahrbaren Werkzeughalter, gemäss dem Oberbegriff des Patentanspruchs 1.

Flachbettplotter dieser Art werden zum Zeichnen, Schneiden, Fräsen oder ähnlichen Arbeiten verwendet, wobei in den Werkzeughalter entsprechende Werkzeuge einsetzbar sind. Das zu bearbeitende Flachbahn-Material, z.B. Papier, Folien, Karton oder Textilbahnen, befinden sich auf dem Flachbett. Die Bewegungen des Werkzeughalters in X- und Y-Richtung erfolgen dabei koordiniert und von einem Programm gesteuert. Zum Antrieb des Werkzeugwagens in X-Richtung und des Werkzeughalters in Y-Richtung dienen Antriebsmotoren, die entsprechend dem vorgegebenen Programm über eine Steuerschaltung angesteuert werden.

Die Umsetzung der Drehbewegung der Antriebsmotoren in die Linearbewegung des Werkzeughalters erfolgt an bestehenden Plottern unterschiedlich. Eine erste Art von Plottern verwendet z.B. für die Bewegung des Werkzeugwagens in X-Richtung Zahnstangen, die am Rand des Flachbetts, ausserhalb der Arbeitsfläche verlaufen. Die Zahnstangen gelten als robuste Bauteile. Sie sind jedoch aufwendig in der Herstellung, so dass sie die Geräte stark verteuern. Auch Zahnriemen sind gebräuchlich. Sie können jedoch nicht die gewünschte Steifigkeit und Spielfreiheit des Antriebs gewährleisten.

Die zweite übliche Art der Antriebsverbindung zwischen den Koordinatenantrieben und dem Werkzeughalter besteht aus Seilzügen an den beiden Enden des Werkzeugwagens. Die Seile, im allgemeinen Stahlseile, verlaufen ähnlich wie die Zahnstangen auf beiden Seiten am Rand des Flachbetts. Sie sind je über eine Antriebsrolle und über eine oder mehrere Umlenkrollen geführt, und sie greifen in beiden Richtungen längs der X-Achse in einer Endlosschleife am Werkzeugwagen an. Obwohl einadrige Drähte für diesen Zweck hinsichtlich der Dehnungsfestigkeit die besseren Werte liefern, werden vorwiegend Litzendrähte verwendet, da sie die bessere Biegeelastizität aufweisen. Damit lassen sich die Seile über Umlenkrollen mit kleinerem Durchmesser führen, wodurch eine kompaktere Gesamtkonstruktion erreicht wird.

Die Verwendung von Litzendrähten führt jedoch zu einem anderen Problem: Plotter dieser Art sollen eine hohe adressierbare Auflösung, z.B. von 0,005 mm, und bei der Positionierung eine hohe statische Wiederholgenauigkeit, z.B. von etwa 0,01 mm, aufweisen. Solche Werte stellen sehr hohe Anforderungen an die Steifigkeit, das heisst an die Federkonstante der Seile. Dabei ist die Steifigkeit bei gegebener MAsse des Wagensystems und bei gegebener Beschleunigung verantwortlich für die dynamische Genauigkeit, das heisst für die Linienqualität des Plotters. Im Beispiel kann die Beschleunigung durchaus Werte von 10 m/s$^2$ erreichen, während die Fahrgeschwindigkeit z.B. 1,0 m/s beträgt.

Bei bekannten grossformatigen Plottern wurden bisher nur einfache Seilantriebe mit Stahlseilen von ca. 2 mm Nenndurchmesser zum Antrieb des Werkzeugwagen eingesetzt. Dadurch wurden auch nur relativ bescheidene Werte für die Steifigkeit des Wagensystems erreicht, so dass diese Antriebsart nur für Plotter einer unteren Genauigkeitsklasse verwendet werden konnte.

Es ist Aufgabe der vorliegenden Erfindung, Massnahmen zu treffen, dass sich Seilzugverbindungen auch für grossformatige Präzisionsplotter ohne Einschränkung zum Antrieb des Werkzeugwagens einsetzen lassen.

Diese Aufgabe wird erfindungsgemäss durch die im Patentanspruch 1 definierten Merkmale gelöst.

Diese Massnahme ermöglicht die Verwendung von dünneren Litzenseilen, wobei aber bessere Werte für die Steifigkeit und damit für die Wiederholgenauigkeit sowie für die dynamische Genauigkeit bei der Positionierung des Werkzeugwagens erreicht werden, als sie bisher mit dickeren Seilen an Plottern niedrigerer Güteklasse erzielt wurden. Durch die Art der Mehrfachanordnung der relativ dünnen Litzenseile konnte überraschenderweise eine Optimierung der beiden gegensätzlich wirkenden Grössen Biegeelastizität und Steifigkeit erreicht werden. Die hohe Wiederholgenauigkeit bei der Positionierung des Werkzeugwagens ist selbst bei häufiger ruckariger Belastung durch starkes Beschleunigen oder Abbremsen des Wagens ohne Nachschwingen über lange Zeit gewährleistet.

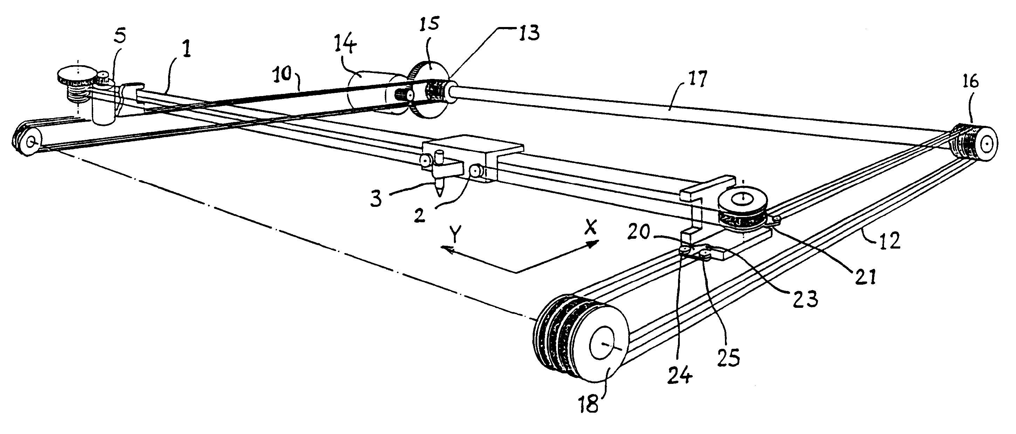

Im folgenden werden Einzelheiten der Erfindung anhand eines Ausführungsbeispiels mit Hilfe der Zeichnung näher beschrieben.

Die Figur zeigt einen Seilantrieb an einem Plotter in schematischer Darstellung.

Ein Werkzeugwagen 1 ist über einem ebenen Plotterbett in X-Richtung verschiebbar. Er ist als Führung für einen Werkzeughalter 2 ausgebildet. Der Werkzeughalter 2 lässt sich am balkenförmigen Werkzeugwagen 1 in Y-Richtung verfahren. Werkzeuge 3, die in den Werkzeughalter 2 eingesetzt werden können, dienen zur Bearbeitung von blattförmigem Material, welches auf dem darunter liegenden Flachbett aufliegt. Als Werkzeuge können z.B. Zeichenstifte, Schneidmesser oder Fräskopf-Einsätze vorgesehen sein.

Der Antrieb des Werkzeughalters 2 in Y-Richtung erfolgt entlang dem balkenförmigen Werkzeugwagen 1 durch einen Y-Antriebsmotor 5 über einen Seilantrieb 4.

In X-Richtung gleitet der gesamte Werkzeugwagen 1 mit darauf befindlichem Werkzeugträger 2, Seilantrieb 4 und Y-Antriebs motor 5 auf Führungen am Plotterbett, die in der Figur nicht im einzelnen gezeigt sind. Angetrieben wird der Werkzeugwagen an seinen Enden über Seilantriebe 10 und 12, die gemeinsam von einem X-Antriebsmotor 14 angetrieben werden. Die Seilantriebe 10 und 12 sind identisch ausgeführt. Sie werden im folgenden näher beschrieben.

Vom Motor 14 werden über ein geeingnetes Untersetzungsgetriebe erste Antriebsrollen 15 und 16 angetrieben, die durch eine Antriebswelle 17 miteinander starr gekoppelt sind. Von der ersten Antriebsrolle 16 sind im Beispiel vier Seile um ein frei gelagerte Umlenkrolle 18 und von dort wieder schleifenförmig zurück zur Antriebsrolle 16 geführt. Dazwischen ist im Antriebs-Trum des Seilzugs 12 der Werkzeugwagen 1 eingesetzt. Die Antriebsrollen 15 und 16 sind vorzugsweise wie Gewinderollen gewendelt. Auf ihnen sind die Seilenden fixiert, so dass sich kein Schlupf ergeben kann.

Verbunden ist der Werkzeugwagen 1 mit dem Seilzug 12 durch je eine im Beispiel dreieckförmige Wippe 20, 21. Mit einer Ecke 23 ist die Wippe 20 gelenkig am Wagen 1 befestigt. An den beiden anderen Ecken der Wippe sind Rollen oder zweite Wippen 24 und 25 angebracht, um welche jeweils ein Seil des Seilzuges 12 gespannt und um 180 Grad herumgeführt ist. Die Wippen 20 und 21 gleichen eventuelle unterschiedliche Zugspannungen an den einzelnen Seilen des Seilzugs 12 aus, so dass die auf den Wagen 1 wirkende Seilspannung immer gleichmässig verteilt wird. Dadurch können die Regelverstärker, welche den Antriebsmotor 14 regeln, mit einen höheren Regelverstärkung betrieben werden, ohne dass der Regelkreis in Eigenschwingungen verfällt. Das Ergebnis ist somit eine präzisere, schnellere und wirkungsvollere Einstellung des Plotterwerkzeugs bei Einhaltung einer hohen Bearbeitungsgenauigkeit.

Die vier Seile des Seilzuges 12 weisen im Beispiel einen Nenndurchmesser von 1,5 mm auf. Sie bestehen z.B. aus 7 x 7 Adern. Der Durchmesser der Rollen 15, 16; 18, 19 beträgt z.B. D = 80 mm. Versuche haben gezeigt, dass Seile mit grösserem Nenndurchmesser und mehr Adern schlechtere Werte für die Steifigkeit aufweisen. Z.B. hatten unter den geschilderten Umständen Seile von 1,5 mm Durchmesser eine um 30 Prozent höhere Steifigkeit (gemessen als Federkonstante in axialer Richtung), verglichen mit Seilen von 2,0 mm Durchmesser. Die bevorzugte Wahl von mehradrigen Stahlseilen mit einem Durchmesser von ca. 1,5 mm für den Antrieb des Werkzeugwagens an Präzisionsplottern stellt also in Verbindung mit der Art der Seilführung eine besonders vorteilhafte konstruktive Lösung dar, die zu überraschenden, in diesem Ausmass nicht zu erwartenden Verbesserungen der Wiederholgenauigkeit bei der Positionierung des Plotterwerkzeugs führt.

## Patentansprüche

1. Plotter mit einem Flachbett, einem darüber in einer ersten Koordinaten-Richtung (X) verfahrbaren balkenförmigen Werkzeugwagen (1) und mit einem am Werkzeugwagen in einer zweiten Koordinaten-Richtung (Y) verfahrbaren Werkzeughalter (2) sowie mit geregelten Antriebsmotoren (5, 14) für die beiden Fahrbewegungen, dadurch gekennzeichnet, dass die Antriebsverbindung vom Antriebsmotor (14) zum Werkzeugwagen (1) über Mehrfach-Seilzüge (10, 12) von jeweils mindestens vier parallel geführten Einzelseilen erfolgt, wobei jeder Mehrfach-Seilzug (12) eine endlose Schleife bildet, welche Antriebsrollen (15, 16) umschlingt und in ihrem Antriebs-Trum den Werkzeugwagen eingespannt hält, und dass die beiden entgegengesetzten Angriffspunkte des jeweiligen Seilzuges am Werkzeugwagen (1) als Wippen (20, 21) ausgebildet sind, welche die Zugkräfte der Einzelseile untereinander ausgleichen.

2. Plotter nach Anspruch 1, dadurch gekennzeichnet, dass die Einzelseile einen Nenndurchmesser unter 2,0 mm aufweisen.

3. Plotter nach Anspruch 1, dadurch gekennzeichnet, dass die Wippen (20, 21) im mittleren Bereich (23) gelenkig am Wagen (1) befestigt sind und an äusseren Angriffspunkten mit Rollen oder zweiten Wippen (24, 25) versehen sind, um welche jeweils ein Einzelseil des Seilzuges (12) gespannt und um 180 Grad herumgeführt ist.

4. Plotter nach Anspruch 1, dadurch gekennzeichnet, dass die Antriebsrollen (15, 16) mit einer Führungswendel zur Aufnahme je eines Seilzug-Endes versehen sind.

## Claims

1. Plotter with a flatbed, a beam-shaped tool carriage (1) movable thereover in a first co-ordinate direction (X) and with a tool holder (2) movable at the tool carriage in a second co-ordinate direction (Y) as well as with regulated drive motors (5, 14) for the two travel movements, characterised thereby that the drive connection of the drive motor (14) to the tool carriage (1) is effected by multiple traction cables (10, 12) respectively of at least four parallelly guided individual cables, wherein each multiple traction cable (12) forms an endless loop which passes around drive rollers (15, 16) and which in its drive run holds the tool carriage in under tension, and that the two opposite points of engagement of the respective tension cable at the tool carriage (1) are constructed as rockers (20, 21), which equalise the tension forces of the individual cables amongst one another.

2. Plotter according to claim 1, characterised thereby, that the individual cables have a nominal diameter below 2.0 millimetres.

3. Plotter according to claim 1, characterised thereby that the rockers (20, 21) are pivotably fastened at the middle region (23) to the carriage (1) and are provided at outer points of engagement with rollers or second rockers (24, 25), respectively about which an individual cable of the traction cable (12) is tensioned and guided around through 180 degrees.

4. Plotter according to claim 1, characterised thereby that the drive rollers (15, 16) are provided with a guide coil for reception of a respective traction cable end.


**Revendications**

1. Traceur avec une base plane, un chariot d'outillage (1) en forme de poutre mobile dans une première direction de coordonnée (X) et avec un porte-outil (2) mobile sur le chariot d'outillage dans une deuxième direction de coordonnée (Y) ainsi qu'avec des moteurs régulés d'entrainement (5, 14) pour les deux mouvements de déplacement, caractérisé en ce que la liaison d'entraînement du moteur d'entrainement (14) au chariot d'outillage (1) se produit au moyen de câbles de transmission multiples (10, 12) dont chacun possède au moins quatre câbles individuels et parallèles, chaque câble de traction multiple (12) forme une boucle sans fin, qui entoure des rouleaux d'entraînement (15, 16) et qui maintient tendu, dans son tronçon d'entraînement, le chariot porte-outil, et en ce que les deux points d'attaque opposés de chaque câble de transmission sur le chariot d'outillage (1) sont configurés comme des bascules (20, 21) qui compensent les forces de traction des câbles individuels.

2. Traceur selon la revendication 1, caractérisé en ce que les câbles individuels présentent un diamètre nominal inférieur à 2,0 mm.

3. Traceur selon la revendication 1, caractérisé en ce que les bascules (20, 21) sont fixées dans leur partie médiane (23) de manière articulée au chariot (1) et sont pourvues, à leur point externe d'attaque de rouleaux ou de secondes bascules (24, 25) autour desquelles est tendu un câble individuel du câble de transmission (12) qui passe en étant guidé sur 180 degrés.

4. Traceur selon la revendication 1, caractérisé en ce que les rouleaux d'entraînement (15, 16) sont pourvus d'un boudinage de guidage pour la réception d'une extrémité du câble de traction.

EP 0 375 760 B1